(19) Europäisches Patentamt
European Patent Office
Office européen des brevets

(11) **EP 4 521 082 A1**

(12) **EUROPEAN PATENT APPLICATION**
published in accordance with Art. 153(4) EPC

(43) Date of publication:
**12.03.2025 Bulletin 2025/11**

(21) Application number: **23819638.0**

(22) Date of filing: **23.05.2023**

(51) International Patent Classification (IPC):
**G01J 3/08** (2006.01) **G01N 21/59** (2006.01)

(52) Cooperative Patent Classification (CPC):
**G01J 3/08; G01N 21/59**

(86) International application number:
**PCT/JP2023/019148**

(87) International publication number:
**WO 2023/238654 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.06.2022 JP 2022092376**

(71) Applicant: **Ushio Denki Kabushiki Kaisha Tokyo 100-8150 (JP)**

(72) Inventors:
• **YOKOYAMA, Takuma**
  **Tokyo 100-8150 (JP)**
• **NAGASHIMA, Toshikazu**
  **Tokyo 100-8150 (JP)**

(74) Representative: **Maiwald GmbH Engineering Elisenhof Elisenstrasse 3 80335 München (DE)**

(54) **OPTICAL MEASUREMENT DEVICE**

(57) Provided is an optical measurement apparatus capable of protecting a photodetector.

The light source apparatus 200 produces wavelength swept light L1. An irradiation optical system 310 irradiates a measurement position 4 with the wavelength swept light L1. A conveyor 330 conveys a sample 2 so as to pass it through the measurement position 4. A light receiver 320 measures an object light L2 ascribed to the wavelength swept light transmitted through the sample 2. An optical path switching element 340 is provided to an optical path of the wavelength swept light L1, and switches the optical path of the wavelength swept light. A controller 350 controls the optical path switching element 340, depending on presence or absence of the target object to be measured 2.

FIG. 2

EP 4 521 082 A1

# Description

## TECHNICAL FIELD

The present disclosure relates to an optical measurement apparatus.

## BACKGROUND ART

Wavelength swept-type spectroscopy is one known method for measuring optical characteristics. A wavelength swept-type spectrometer generates wavelength swept light whose wavelength changes with time, and irradiates a target object to be inspected with the wavelength swept light. The wavelength swept light is given by a pulse or a pulse train having one-to-one correspondence between time and wavelength. The wavelength swept light is irradiated onto the target object to be inspected, and a time-axis waveform of the resultant light is detected with a photodetector. An output waveform of the photodetector represents a spectrum whose time axis corresponds to wavelength.

Spectroscopic analysis is classified into transmission type that handles transmitted light of a target object as the object light, and a reflection type that handles reflected light as the object light. The reflection type is suitable for measuring an object having a high reflectance. Optical information obtainable therefrom is, however, limited to those ascribable to the surface or around of the target object. The reflection type is, therefore, considered to be not accurate enough for measurement of the target object such as precise industrial product, specimen collected from plant/animal, substance ingested by human body, liquid or gas produced in production plant.

The transmission type can obtain optical characteristics not only from the surface of the target object, but also from deep inside, and is therefore suitable for a case where the target object is food, beverage or the like (collectively referred to as food and drink, hereinafter). Patent Literature 1 discloses a transmission-type product inspection apparatus. The product inspection apparatus has an irradiation optical system structured to irradiate a front face of a product (target object to be inspected) with pulsed light, and a photodetector arranged on the back side of the product, and is structured to receive light transmitted through the product.

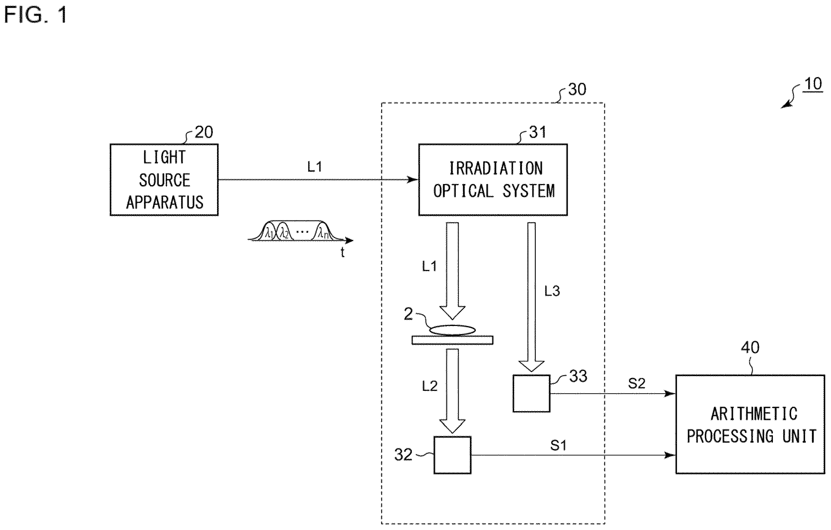

Fig. 1 is a diagram illustrating a spectrometer 10 of a wavelength swept-type. The spectrometer 10 has a light source apparatus 20, a spectroscopic head 30, and an arithmetic processing unit 40.

The light source apparatus 20 produces wavelength swept light L1. The wavelength swept light L1 is guided to the spectroscopic head 30. An irradiation optical system 31 of the spectroscopic head 30 irradiates a sample 2 with the wavelength swept light L1. A first photodetector 32 receives transmitted light (object light) L2 obtained as a result of irradiation of the wavelength swept light L1 onto the sample 2.

In the irradiation optical system 31, a part of the wavelength swept light L1 is branched to yield a reference light L3. A second photodetector 33 measures the reference light L3.

A first detection signal S1 generated by the first photodetector 32, and a second detection signal S2 generated by the second photodetector 33 are supplied to the arithmetic processing unit 40. The object light L2 and the reference light L3 take over the one-to-one time-wavelength correspondence of the wavelength swept light L1. The time-axis waveform of the first detection signal S1 may be converted to a spectrum of the object light L2, by converting the time axis to the wavelength. Similarly, the time-axis waveform of the second detection signal S2 may be converted to a spectrum of the reference light L3, by converting the time axis to the wavelength. The arithmetic processing unit 40 calculates proportion of the object light L2 relative to the reference light L3 for each corresponding wavelength, and measures a spectral characteristic (reflectance) of the sample 2.

## RELATED-ART LITERATURE

### PATENT LITERATURE

Patent Literature 1: JP 2020-159973A

## SUMMARY OF INVENTION

### TECHNICAL PROBLEM

The present inventors examined the transmission-type spectrometer, to find the problems below.

For a target product to be measured (also referred to as product, hereinafter) having low light transmittance and high diffusivity, the photodetector is designed and selected while being adapted to low power of incident light. Meanwhile, the light source apparatus used therefor is a pulse laser having high peak power, so as to increase power of the transmitted light.

Industrially mass-produced products, when inspected, are automatically conveyed on a conveyor at high speed, which are anticipated to fall off from the conveyor, or to cause displacement. This would result in an event such that the product is absent at a measurement position such that the product should be present. In this event, the wavelength swept light L1, which is a pulsed laser beam irradiated on the measurement position, will be directly incident on the photodetector, without passing through the product.

Since the photodetector is designed and selected while being adapted to low power of the incident light as described previously, so that the direct incidence of the laser beam having a high peak power would exceed an allowable power of the photodetector, and would degrade the reliability.

Some product conveyors may convey the products while keeping a gap in between. The laser beam in this case would be incident on the photodetector through the gap.

In particular, an element having a built-in amplification mechanism such as avalanche photodiode, is known to have a low damage threshold. For example, an InGaAs avalanche photodetector APD430C from THORLABS, USA has a damage threshold of 1 mW. The power of the laser in the present spectroscopic method is sufficiently larger than the threshold.

The present disclosure has been arrived at considering such circumstances, wherein one of exemplary objects of a certain mode of the disclosure is to provide an optical measurement apparatus capable of protecting the photodetector.

SOLUTION TO PROBLEM

An optical measurement apparatus of the present disclosure includes:

> a light source apparatus structured to generate wavelength swept light;
> an irradiation optical system structured to irradiate a measurement position with the wavelength swept light;
> a conveyor structured to convey a target object to be measured so as to pass it through the measurement position;
> a light receiver structured to measure an object light ascribed to the wavelength swept light transmitted through the target object to be measured;
> an optical path switching element provided to an optical path of the wavelength swept light, and is structured to switch the optical path of the wavelength swept light; and
> a controller structured to control the optical path switching element, depending on presence or absence of the target object to be measured.

Also another aspect of the present disclosure relates to an optical measurement apparatus. The optical measurement apparatus includes:

> a light source apparatus structured to generate wavelength swept light;
> an irradiation optical system structured to irradiate a measurement position with the wavelength swept light;
> a conveyor structured to convey a target object to be measured so as to pass it through the measurement position;
> a light receiver structured to measure an object light ascribed to the wavelength swept light transmitted through the target object to be measured;
> a light shielding element provided to an optical path of the wavelength swept light, and is structured to switch between transmission/non-transmission of the wavelength swept light; and
a controller structured to control the light shielding element, depending on presence or absence of the target object to be measured.

Note that also free combinations of these constituents, and also any of the constituents and expressions exchanged among the method, apparatus, and system, are valid as the modes of the present disclosure. Also note that the description of this section (SOLUTION TO PROBLEM) does not describe all essential features of the invention, and thus also subcombinations of these features described may constitute the invention.

ADVANTAGEOUS EFFECTS OF INVENTION

One aspect of the present disclosure can protect the photodetector.

BRIEF DESCRIPTION OF DRAWINGS

> [Fig. 1] Fig. 1 is a diagram illustrating a wavelength swept-type spectrometer.
> [Fig. 2] Fig. 2 is a diagram illustrating an optical measurement apparatus according to Embodiment 1.
> [Fig. 3] Fig. 3 is a drawing illustrating wavelength swept light.
> [Fig. 4] Fig. 4 is a drawing explaining spectroscopy with use of the optical measurement apparatus illustrated in Fig. 2.
> [Fig. 5] Fig. 5 is a diagram illustrating an optical measurement apparatus according to Modified Example 1.1.
> [Fig. 6] Fig. 6 is a diagram illustrating an optical measurement apparatus according to Modified Example 1.2.
> [Fig. 7] Fig. 7 is a diagram illustrating an optical measurement apparatus according to Modified Example 1.3.
> [Fig. 8] Fig. 8 is a diagram illustrating an optical measurement apparatus according to Modified Example 1.4.
> [Fig. 9] Fig. 9 is a drawing illustrating an optical measurement apparatus according to Embodiment 2.
> [Fig. 10] Fig. 10 is a diagram illustrating an optical measurement apparatus according to Modified Example 2.1.

DESCRIPTION OF EMBODIMENTS

(Outline of Embodiments)

Some exemplary embodiments of the present disclosure will be outlined. This outline will provide introduction into the detailed description that follows, and will brief some concepts of one or more embodiments for basic understanding thereof, without limiting the scope of the invention or disclosure. Also note this summary is not a comprehensive overview of all possible embodiments, and thus does not limit the essential components of the embodiments. For convenience, the term "one embodiment" may be used to designate a single embodiment (Example or Modified Example), or a plurality of embodiments (Examples or Modified Examples) disclosed in the present specification.

The optical measurement apparatus according to one embodiment includes:

a light source apparatus structured to generate wavelength swept light;
an irradiation optical system structured to irradiate a measurement position with the wavelength swept light;
a conveyor structured to convey a target object to be measured so as to pass it through the measurement position;
a light receiver structured to measure an object light ascribed to the wavelength swept light transmitted through the target object to be measured;
an optical path switching element provided to an optical path of the wavelength swept light, and is structured to switch the optical path of the wavelength swept light; and
a controller structured to control the optical path switching element, depending on presence or absence of the target object to be measured.

The optical measurement apparatus according to one embodiment includes:

a light source apparatus structured to generate wavelength swept light;
an irradiation optical system structured to irradiate a measurement position with the wavelength swept light;
a conveyor structured to convey a target object to be measured so as to pass it through the measurement position;
a light receiver structured to measure an object light ascribed to the wavelength swept light transmitted through the target object to be measured;
a light shielding element provided to an optical path of the wavelength swept light, and is structured to switch between transmission/non-transmission of the wavelength swept light; and
a controller structured to control the light shielding element, depending on presence or absence of the target object to be measured.

These apparatuses, structured to monitor presence or absence of the target object to be measured, can detect an event where the measurement target is absent on the optical path of the wavelength swept light emitted from the light source apparatus towards the photodetector of the light receiver, in other words, an event where the wavelength swept light can be directly incident on the photodetector. Upon detection of such event, these apparatuses can deviate the optical path of the wavelength swept light from the normal optical path directed to the photodetector, or can enable the light shielding element, thereby successfully preventing the wavelength swept light from being directly incident on the photodetector.

In one embodiment, the optical path switching element may contain any one of a galvano mirror, a micro electro mechanical systems (MEMS) mirror, a piezo-driven mirror, a polygon mirror, or a fiber switch.

In one embodiment, the optical measurement apparatus may further contain an aperture provided on the output end side of the optical path switching element. In this structure, the light deviated from the normal optical path is shielded by the aperture, and can therefore be prevented from becoming stray light in the optical measurement apparatuses.

In one embodiment, the aperture may be a pinhole, a slit, or a knife edge.

In one embodiment, the light shielding element may contain either a movable shutter or a variable attenuator. In one embodiment, the variable attenuator may contain any of a liquid crystal shutter, an acousto-optical modulator, or an electro-optical modulator. The light shielding element does not need to completely shield the wavelength swept light, and may only be able to reduce the amount of light down to or below the damage threshold of the photodetector.

(Embodiments)

The present disclosure will be explained below on the basis of preferred embodiments, referring to the attached drawings. All constituents, members and processes illustrated in the individual drawings will be given same reference numerals, so as to properly avoid redundant explanations. The embodiments are merely illustrative, and are not restrictive about the disclosure. All features and combinations thereof described in the embodiments are not always essential to the disclosure.

Dimensions (thickness, length, width, etc.) of the individual members illustrated in the drawings may be appropriately enlarged or shrunk for easy understanding. Furthermore, the dimensions of the plurality of members do not necessarily indicate the dimensional relationship among them, so that a certain member A, if depicted thicker than another member B in a drawing, may even be thinner than the member B.

(Embodiment 1)

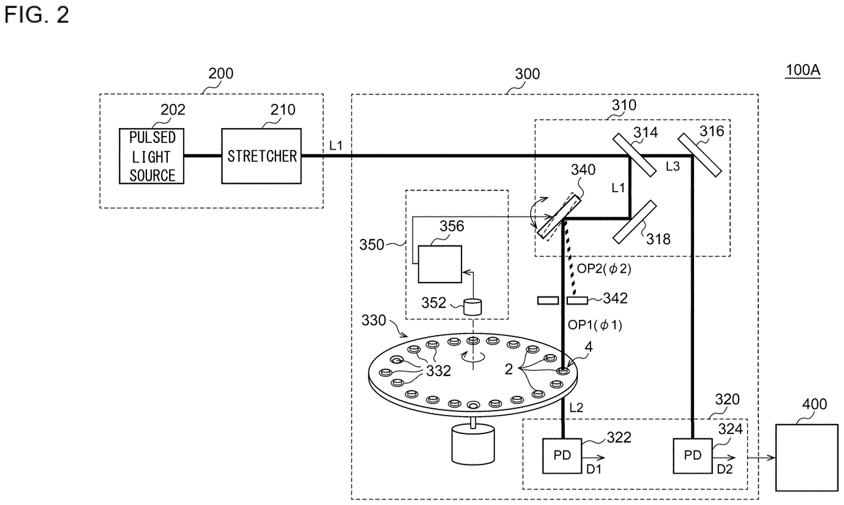

Fig. 2 is a diagram illustrating an optical measurement apparatus 100A according to Embodiment 1.

The optical measurement apparatus 100A has a light source apparatus 200, a spectroscopic head 300, and an arithmetic processing unit 400. The optical measurement apparatus 100A is directed to inspection of a product (sample 2) that is industrially mass-produced.

The light source apparatus 200 generates the wavelength swept light L1 whose wavelength changes with time. The wavelength swept light L1 is featured by one-to-one correspondence between time and wavelength. This is expressed as the wavelength swept light L1 has "uniqueness of wavelength".

The light source apparatus 200 contains a pulsed light source 202 and a stretcher 210. The pulsed light source 202 emits broadband pulsed light L1a having a broadband continuous spectrum. The spectrum of the broadband pulsed light L1a is continuous typically within a wavelength range from 900 nm to 1300 nm, at least over a 10 nm range, preferably over a 50 nm range, and more preferably over a 100 nm range. Width of the wavelength range of the broadband pulsed light L1a may only be wide enough to cover a wavelength range necessary for the spectroscopy.

The stretcher 210 stretches the broadband pulsed light L1a emitted from the pulsed light source 202 on the time axis, to generate the wavelength swept light L1.

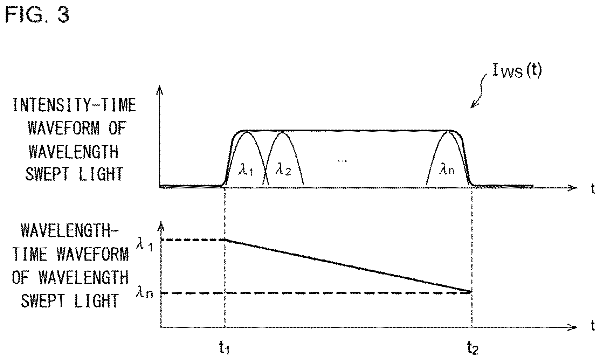

Fig. 3 is a drawing illustrating the wavelength swept light L1. The upper tier of Fig. 3 illustrates intensity (time-axis waveform) $I_{WS}(t)$ of the wavelength swept light L1, and the lower tier illustrates a temporal change in wavelength $\lambda$ of the wavelength swept light L1. The wavelength swept light L1 in this example is given by a single pulse, having dominant wavelength $\lambda_1$ at the leading edge, and dominant wavelength $\lambda_n$ at the trailing edge, while demonstrating a temporal change in the wavelength between $\lambda_1$ and $\lambda_n$ within one pulse. The wavelength swept light L1 in this example is a positively chirped pulse ($\lambda_1 > \lambda_n$) whose frequency increases with time, in other words, whose wavelength shortens with time. Note that the wavelength swept light L1 may alternatively be a negatively chirped pulse whose wavelength becomes longer with time ($\lambda_1 < \lambda_n$). As described later, the wavelength swept light L1 may be given by a pulse train that contains temporally isolated pulses (wave fluxes) for each wavelength.

Referring now back to Fig. 2. The spectroscopic head 300 contains an irradiation optical system 310, a light receiver 320, a conveyor 330, an optical path switching element 340, an aperture 342, and a controller 350.

The irradiation optical system 310 receives the wavelength swept light L1 from the light source apparatus 200, and irradiates a measurement position where the target sample 2 to be measured should pass. The optical path switching element 340 in this embodiment is constituted as a part of the irradiation optical system 310, and the irradiation optical system 310 contains a beam splitter 314, mirrors 316, 318, and the optical path switching element 340. The irradiation optical system 310 may contain unillustrated mirror, lens, or the like.

The beam splitter 314 splits the wavelength swept light L1 into two beams. One beam is a measurement light to be irradiated on the sample 2, and the other beam is the reference light L3. The mirror 318 directs the measurement light to the optical path switching element 340.

The optical path switching element 340 can be switched between a first state $\varphi 1$ and a second state $\varphi 2$, and can direct in the first state $\varphi 1$ the wavelength swept light L1 to a first optical path OP1 laid through the measurement position 4, meanwhile can direct in the second state $\varphi 2$ the light to a second optical path OP2 deviated from the first optical path OP1. For the optical path switching element 340, usable is a galvano mirror, a micro electro-mechanical systems (MEMS) mirror, a polygon mirror, a piezo-driven mirror or the like, but not limited thereto.

The aperture 342 is interposed between the optical path switching element 340 and the measurement position 4. The aperture 342 is an iris, a pinhole, a slit, a knife edge (single-edged slit) or the like, with which the first optical path OP1 is opened, meanwhile the light on the second optical path OP2 is shielded. Provision of the aperture 342 can prevent the wavelength swept light L1 from becoming stray light in the second state $\varphi 2$.

The irradiation optical system 310 may further contain, in a preceding stage of the beam splitter 314, a collimator that collimates the wavelength swept light L1 emitted from the light source apparatus 200.

The conveyor 330 conveys the target sample 2 to be measured so as to pass it through the measurement position 4. Structure and shape of the conveyor 330 are not particularly limited. The conveyor 330 in this embodiment is of a disc-rotating type, with a plurality of sample holders 332 arranged in the periphery of the disc. An unillustrated mounter sequentially mounts the sample 2 before inspection on the sample holders 332, and sequentially takes out the inspected sample 2. During a normal operation of the conveyor 330 and the mounter, the sample 2 is mounted on all the sample holders 332.

The light receiver 320 contains a first photodetector 322 and a second photodetector 324. The first photodetector 322 detects the object light L2 obtained by irradiating the wavelength swept light L1 onto the sample 2. The object light L2 in this embodiment is light ascribed to the wavelength swept light L1 transmitted through the sample 2. The second photodetector 324 detects the reference light L3. Output signals from the first photodetector 322 and the second photodetector 324 are respectively converted to digital signals D1 and D2 by an unillustrated A/D converter.

A time-axis waveform $I_{OBJ}(t)$ of the object light L2 given by the digital signal D1, and a time-axis waveform $I_{REF}(t)$ of the reference light L3 given by the digital signal D2 are taken into an arithmetic processing unit 400.

In the wavelength swept-type spectroscopy, the wavelength swept light L1 is featured by the one-to-one correspondence between time and wavelength. This correspondence is of course owned by the reference light L3, and also inherited by the object light L2. With use of such correspondence between time and wavelength, the arithmetic processing unit 400 converts the time-axis waveform $I_{OBJ}(t)$ of the object light L2 into a spectrum $I_{OBJ}(\lambda)$ in terms of frequency domain. The arithmetic processing unit 400 also converts the time-axis waveform $I_{REF}(t)$ of the reference light L3 into a spectrum, followed by appropriate scaling, to calculate a reference spectrum $I_{REF}(\lambda)$.

The processing by the arithmetic processing unit 400 is not particularly limited. For example, the arithmetic processing unit 400 can calculate transmittance $T(\lambda)$ of an object OBJ, from the reference spectrum $I_{REF}(A)$ and the spectrum $I_{OBJ}(\lambda)$ of the object light L2.

$$T(\lambda) = I_{OBJ}(\lambda)/I_{REF}(\lambda)$$

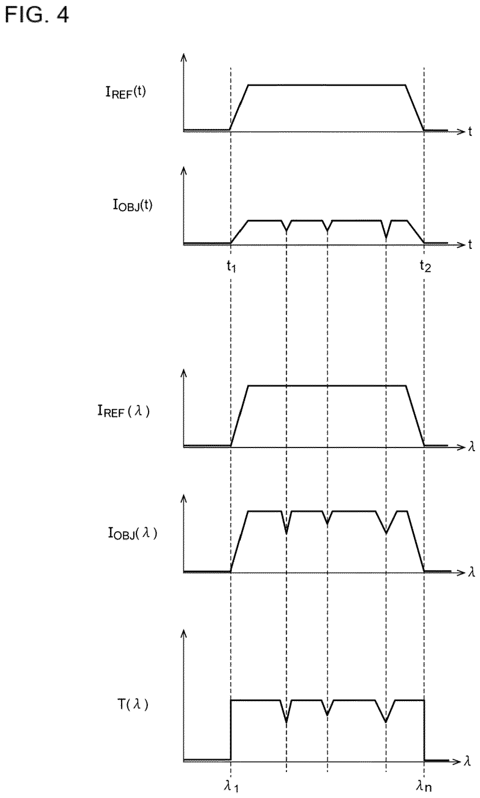

Fig. 4 is a drawing explaining spectroscopy with use of the optical measurement apparatus 100A illustrated in Fig. 2. Since the wavelength swept light L1 is featured by the one-to-one correspondence between time t and wavelength $\lambda$ as described previously, so that the time-axis waveform $I_{REF}(t)$ may be converted to the spectrum $I_{REF}(\lambda)$ in terms of frequency domain.

Also the time-axis waveform $I_{OBJ}(t)$ of the object light L2 will have the one-to-one correspondence between time t and wavelength A. The arithmetic processing unit 400 can therefore convert the waveform $I_{OBJ}(t)$ of the object light L2 given by the output of the light receiver 320, into the spectrum $I_{OBJ}(\lambda)$ of the object light L2.

The arithmetic processing unit 400 can calculate transmission spectrum $T(\lambda)$ of the object OBJ, from $I_{OBJ}(\lambda)/I_{REF}(\lambda)$, which is a ratio of two spectra $I_{OBJ}(\lambda)$ and $I_{REF}(\lambda)$.

Given that a relation between time t and wavelength $\lambda$ regarding the wavelength swept light L1 is expressed by a function $\lambda = f(t)$. Most simply, the wavelength $\lambda$ varies linearly with time t, according to a linear function. Lowering of the time-axis waveform $I_{OBJ}(t)$ of the object light L2 at a certain point in time $t_x$ means that the transmission spectrum $T(\lambda)$ has an absorption spectrum at wavelength $\lambda_x = f(t_x)$.

Note that the processing by the arithmetic processing unit 400 is not limited thereto. The transmission spectrum $T(\lambda)$ may alternatively be calculated by calculating $T(t) = I_{OBJ}(t)/I_{REF}(t)$, which is a ratio of two time-axis waveforms $I_{OBJ}(t)$ and $I_{REF}(t)$, and then by converting the variable t of the time-axis waveform T(t) into A.

Referring now back to Fig. 2. The controller 350 monitors the conveyor 330, and determines presence or absence of the sample 2 in each sample holder 332. The controller 350 controls the optical path switching element 340, depending on presence or absence of the sample 2.

For example, the controller 350 contains a position sensor 352 and an arithmetic unit 356. The position sensor 352 is typically a rotary encoder, which detects the position (angle of rotation) of the conveyor 330.

The arithmetic unit 356 preliminarily stores position information (load information) of the sample holder 332 not occupied by the sample 2. The load information is obtainable typically from a mounter that mounts the sample 2 on the sample holder 332, or from a host controller that controls the mounter. Alternatively, the load information may be manually entered by an operator who operates the optical measurement apparatus 100. Alternatively, in a case there is a preset inspection sequence by which a plurality of sample 2 are inspected in units (lots), wherein all sample holders 332 are occupied during the inspection for one lot, and will be vacant in an interval between the lots, absence of the sample 2 may be judged by the vacancy of the sample holders 332 in the interval between the lots. The arithmetic unit 356 compares the measurement value of the position sensor 352 with the load information that indicates the position of the sample holder 332 not occupied by the sample 2, and determines presence or absence of the sample at the measurement position 4.

The arithmetic unit 356 controls the optical path switching element 340, according to the result of determination regarding presence or absence of the sample 2 at the measurement position 4.

The arithmetic unit 356 keeps the optical path switching element 340 in the first state $\varphi 1$, over a period the sample holder 332 occupied by the sample 2 passes through the measurement position 4. On the contrary, the arithmetic unit 356 switches the optical path switching element 340 to the second state $\varphi 2$, over a period the sample holder 332 not occupied by the sample 2 passes through the measurement position 4.

The optical path switching element 340 may be kept either in the first state $\varphi 1$ or in the second state $\varphi 2$, over a period the structure (disk) between the sample holders 332 passes through the measurement position 4. Basically, the sample holders 332 are more probable to have the sample 2 mounted thereon, whereas less probable to have no sample 2. Considering the service life of the optical path switching element 340, the optical path switching element 340 is preferably used while reducing the number of times of switching. The controller 350 therefore preferably keeps the optical path switching element 340 in the first state $\varphi 1$, over a period the structure (disk) between the sample holders 332 passes through the measurement position 4.

The basic structure and operations of the optical measurement apparatus 100A have been described.

In the optical measurement apparatus 100A, the optical path switching element 340 deviates the optical path of the wavelength swept light L1 from the normal optical path OP1, if the sample 2 is not present at the measurement position 4. This successfully prevents the high-power wavelength swept light L1, not attenuated by the sample 2, from being directly incident on the first photodetector 322, thereby protecting the first photodetector 322.

Experiments were run to verify the effect of the optical measurement apparatus 100A. The beam diameter of the wavelength swept light L1 in the wavelength swept light L1 was set to 0.8 mm ($1/e^2$ diameter). A slit with a 2 mm wide opening was used as the aperture 342. Retraction distance, that is, the distance between the first optical path OP1 and the second optical path OP2 on the aperture 342 was set to 3 mm.

Intensity of light incident on the first photodetector 322, through the sample holder 332 not occupied by the sample 2, was measured for each of the first state φ1 and the second state φ2. Intensity of incidence on the first photodetector 322 was found to be 58 mW in the first state φ1, whereas 12 μW in the second state φ2, proving reduction down to 0.021%. This level is sufficiently lower than an allowable input (damage threshold) of the first photodetector 322.

Distance of retraction may be experimentally determined, in consideration of the damage threshold of the photodetector 322, the beam diameter, conveyance frequency, and performance (speed) of the optical path switching element 340.

Next, Modified Examples derived from Embodiment 1 will be described.

(Modified Example 1.1)

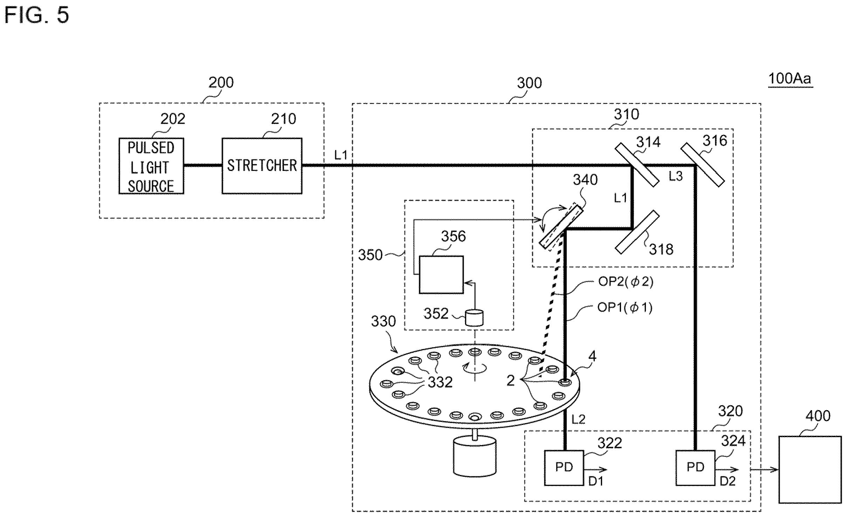

Fig. 5 is a diagram illustrating an optical measurement apparatus 100Aa according to Modified Example 1.1. In this Modified Example, the aperture 342 illustrated in Fig. 2 is omitted. The second optical path OP2, over a period the optical path switching element 340 is kept in the second state φ2, is directed to a retreat position on the structure of the conveyor 330, while avoiding the areas of the sample holders 332. The other details are same as those illustrated in Fig. 2.

(Modified Example 1.2)

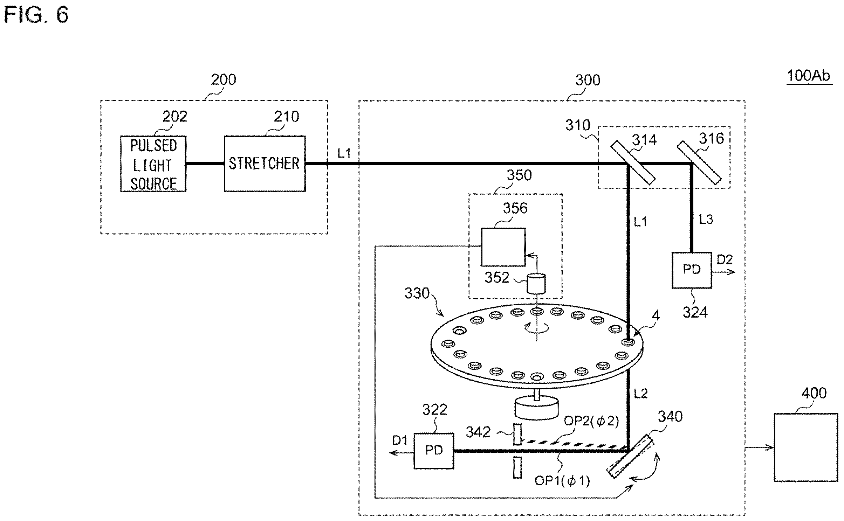

Fig. 6 is a diagram illustrating an optical measurement apparatus 100Ab according to Modified Example 1.2. Although the optical path switching element 340 illustrated in Fig. 2 was a part of the irradiation optical system 310, the optical path switching element 340 in this Modified Example 1.2 is positioned differently from that in Fig. 2. More specifically, the optical path switching element 340 is arranged closer to the first photodetector 322 as viewed from the measurement position 4. The other details are same as those illustrated in Fig. 2.

(Modified Example 1.3)

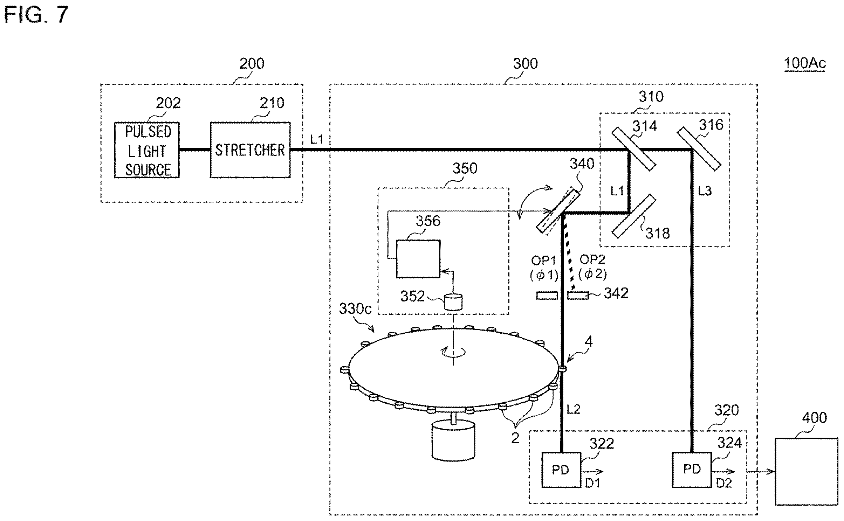

Fig. 7 is a diagram illustrating an optical measurement apparatus 100Ac according to Modified Example 1.3. In this Modified Example 1.3, a conveyor 330c is structured differently from that in Fig. 2. The conveyor 330c is similar to the conveyor 330 illustrated in Fig. 2 in that it has the rotating disk, but has no sample holder 332, instead having a vacuum suction mechanism that supports the sample 2 at any desired position on the circumference.

The controller 350 compares the measurement value of the position sensor 352, with the position information of the sample holder not occupied by the sample, having been preliminarily stored in the arithmetic unit 356, and estimates whether the sample 2 is present or absent at the measurement position 4. The controller 350 switches the optical path switching element 340 to the first state φ1 over a period the sample 2 is present at the measurement position 4, meanwhile switches the optical path switching element 340 to the second state φ2 over a period the sample 2 is absent at the measurement position 4.

The aperture 342 illustrated in Fig. 7 is omissible. Although the wavelength swept light L1 guided through the second optical path OP2 in this case can propagate without being blocked by the aperture 342, the purpose of protection of the first photodetector 322 may be fulfilled since the light is not incident on the first photodetector 322. The stray light, if anticipated, may be appropriately dealt with.

Alternatively, in a case where the aperture 342 illustrated in Fig. 7 is omitted, the second optical path OP2 may be determined so as to be directed to the disk as illustrated in Fig. 5.

(Modified Example 1.4)

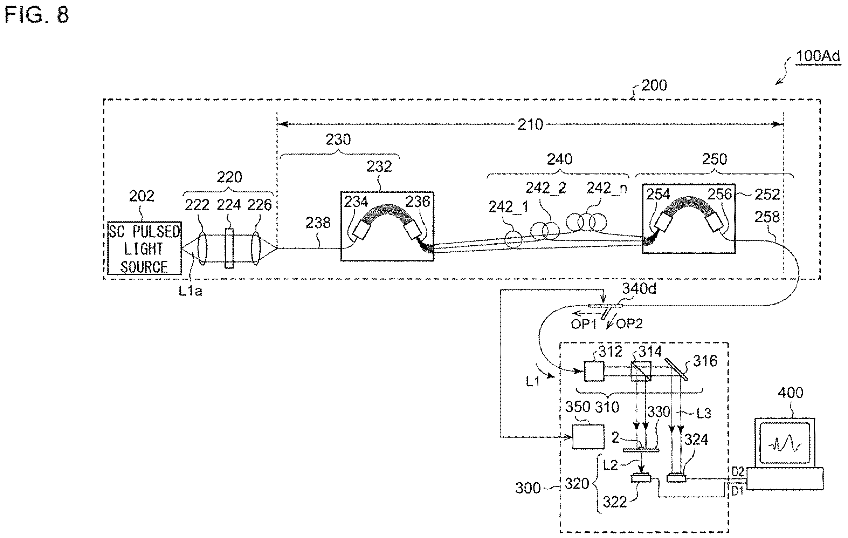

Fig. 8 is a diagram illustrating an optical measurement apparatus 100Ad according to Modified Example 1.4. An optical path switching element 340d in this Modified Example 1.4 is arranged between the light source apparatus 200 and the spectroscopic head 300.

For example, they are coupled by an optical fiber (output-side fiber) 258, and the optical path switching element 340d is connected to the output-side fiber 258. The optical path switching element 340d is a fiber switch, whose one output is connected to the spectroscopic head 300 through the first optical path OP1, meanwhile the other output is directed to the second optical path OP2.

Fig. 8 illustrates an exemplary specific structure of the light source apparatus 200. The light source apparatus 200 has a pulsed light source 202, a wavelength selector 220, and a stretcher 210.

The pulsed light source 202 emits broadband pulsed light L1a having a broadband continuous spectrum. The spectrum of the broadband pulsed light L1a is continuous typically within a wavelength range from 900 nm to 1300 nm, at least over a 10 nm range, preferably over a 50 nm range, and more preferably over a 100 nm range. Width of the wavelength range of the broadband pulsed light L1a may only be wide enough to cover a wavelength range necessary for the spectroscopy.

For example, the pulsed light source 202 may contain an ultrashort pulse laser and a nonlinear element. The ultrashort pulse laser is exemplified by gain-switched laser, microchip laser, and fiber laser.

The nonlinear element further widens the spectral width of the ultrashort pulse generated by the ultrashort pulse laser, with the aid of a nonlinear phenomenon. The nonlinear element is preferably a fiber, to which photonic crystal fiber or other nonlinear fiber is applicable. Mode of the fiber, although preferably single mode, may alternatively be multimode so long as a sufficient level of nonlinearity may be demonstrated.

The pulsed light source 202 usable herein may be other broadband pulsed light source, such as superluminescent diode (SLD).

The broadband pulsed light L1a output from the nonlinear element has a pulse width in the order of femtoseconds to nanoseconds.

The broadband pulsed light L1a generated by the pulsed light source 202 is once emitted to a free space.

The wavelength selector 220 selects a wavelength band to be used for the measurement from the broadband pulsed light L1a, and cuts off any wavelength band not to be used. For example, the wavelength selector 220 contains a lens 222, a wavelength selection filter 224, and a condenser lens 226.

The lens 222 collimates the broadband pulsed light L1a. The wavelength selection filter 224 allows a wavelength band to be used for the measurement to transmit therethrough, and cuts off any wavelength band no to be used by reflection or absorption. The condenser lens 226 condenses the light transmitted through the wavelength selection filter 224 onto the input end of a divider 230.

The stretcher 210 receives the broadband pulsed light L1a, and convert the light into the wavelength swept light L1. The stretcher 210 contains the divider 230, a delay line 240, and a coupler 250.

The divider 230 contains an input-side fiber 238 and a first AWG 232. The first AWG 232 has an input waveguide 234, and a plurality n ($n \geq 2$) of output waveguides 236. The first AWG 232 receives the broadband pulsed light L1a through the input-side fiber 238. The light guided through the input waveguide 234 is branched into n lines of the output waveguides 236, according to the wavelength.

The delay line 240 contains a plurality n of fibers 242_1 to 242_n. The fibers 242_1 to 242_n have different lengths, and give different levels of delay to the multiple beams divided by the divider 230.

Assuming now the broadband pulsed light L1a before being divided is given by a positive chirp pulse (up-chirp pulse) whose frequency increases (wavelength shortens) with time. The pulse in this case contains a component having the longest wavelength $\lambda_1$ at the leading edge, and a component having the shortest wavelength $\lambda_n$ at the trailing edge.

The plurality of fibers 242_1 to 242_n have different lengths $l_1$ to $l_n$. Let $\lambda_1$ denote the longest wavelength, and let $\lambda_n$ denote the shortest wavelength, it suffices to fulfill a relation of $l_1 < l_2 < ... < l_n$, in order to give the wavelength swept light L1 as a positive chirp pulse like the broadband pulsed light L1a. In an exemplary case with n = 20, the lengths $l_1$ to $l_{20}$ of the twenty fibers 242 may increase from 1 m to 20 m in one-meter increments.

The fibers 242_1 to 242_n do not necessarily have group delay characteristics which differ for each wavelength, and may use the same fiber (having the same core/clad material). In this context, the fiber 242 usable herein may be a multi-mode fiber, which is advantageous in that any unintended nonlinear optical effect is avoidable.

The coupler 250 recombines a plurality of beams having been differently delayed by the delay line 240. The coupler 250 typically contains a second AWG 252 and the output-side fiber 258. The second AWG 252 has n lines of input waveguides 254, and an output waveguide 256.

The n lines of input waveguides 254 have the n fibers 242_1 to 242_n connected thereto. The second AWG 252 multiplexes n beams guided through the n lines of input waveguides 254, and outputs the resultant beam to the output waveguide 256. The input end of the output-side fiber 258 is connected to the output waveguide 256.

The output-side fiber 258 extends to the spectroscopic head 300, and the output end of the output-side fiber 258 is connected to the spectroscopic head 300.

With sufficiently large delays given by the fibers 242, the individual wave fluxes having the wavelengths $\lambda_1$ to $\lambda_n$ are temporally separated, thus converting the wavelength swept light L1 to a pulse train that contains n pulses corresponded to the wavelengths $\lambda_1$ to $\lambda_n$.

The spectroscopic head 300 contains the controller 350. The controller 350 compares the measurement value of the position sensor 352, with the position information of the sample holder not occupied by the sample, having been preliminarily stored in the arithmetic unit 356, to determine whether the sample 2 is present or absent, and controls the optical path switching element 340d with reference to the result of determination.

(Embodiment 2)

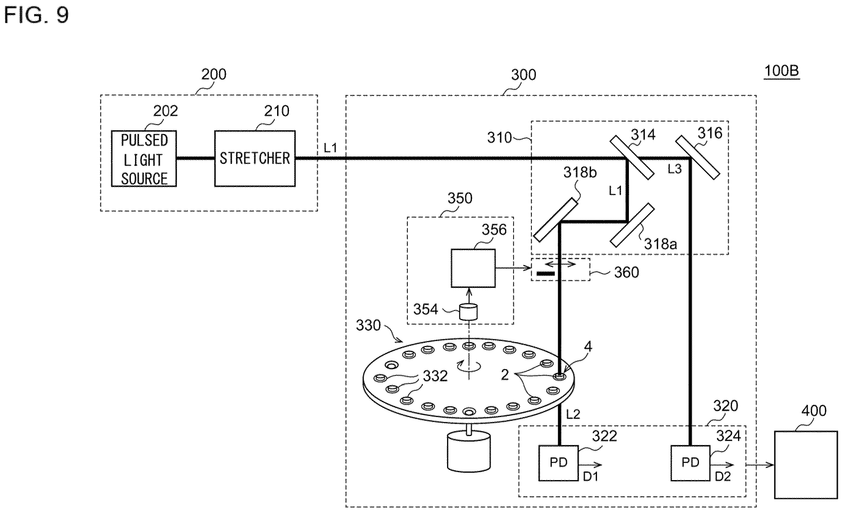

Fig. 9 is a drawing illustrating an optical measurement apparatus 100B according to Embodiment 2. The optical measurement apparatus 100B contains a light shielding element 360, in place of the optical path switching element 340 illustrated in Fig. 2.

The light shielding element 360 is arranged on the optical path of the wavelength swept light L1, and is structured to be switchable between the first state $\varphi1$ and the second state $\varphi2$. The light shielding element 360 allows the wavelength swept light L1 to pass therethrough in the first state φ1 (transmission state), and shields the object light L2 in the second state φ2. Light shielding also includes dimming.

For the light shielding element 360, either a movable shutter or a variable attenuator is applicable. The variable attenuator is exemplified by liquid crystal shutter, acousto-optical modulator (AOM), and electro-optical modulator (EOM).

The controller 350 controls the state of the light shielding element 360. The control by the controller 350 is similar to that in Embodiment 1.

In the optical measurement apparatus 100B according to Embodiment 2, the light shielding element 360 shields the optical path of the wavelength swept light L1, if the sample 2 is absent at the measurement position 4. This successfully prevents the high-power wavelength swept light L1, not attenuated by the sample 2, from being directly incident on the first photodetector 322, thereby protecting the first photodetector 322.

Next, Modified Examples derived from Embodiment 2 will be described.

(Modified Example 2.1)

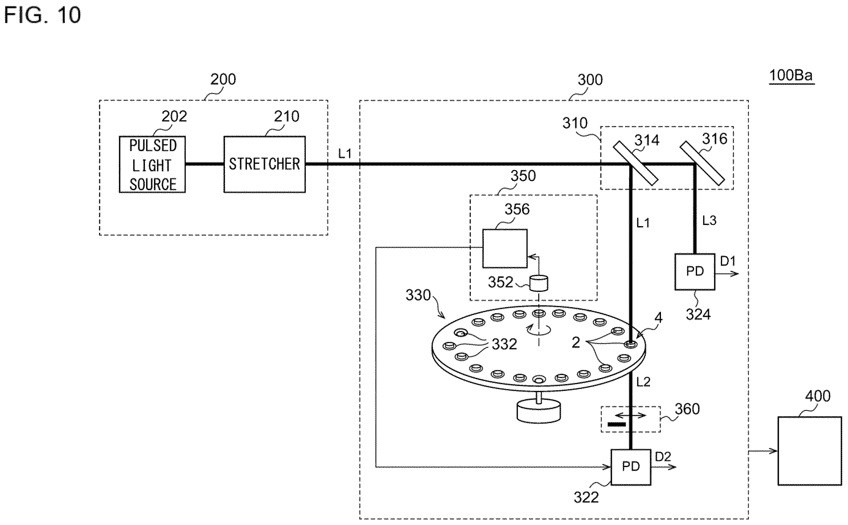

Fig. 10 is a diagram illustrating an optical measurement apparatus 100Ba according to Modified Example 2.1. In Modified Example 2.1, the light shielding element 360 is arranged on the path of the wavelength swept light L1, closer to the first photodetector 322 as viewed from the measurement position 4.

(Modified Example 2.2)

The conveyor 330c illustrated in Fig. 7 may be applied to Embodiment 2.

(Modified Example 2.3)

In Embodiment 2, the light shielding element 360 may be arranged between the light source apparatus 200 and the spectroscopic head 300, like in the case illustrated in Fig. 8.

Lastly, a modified example relevant to both the Embodiment 1 and Embodiment 2 will be explained.

The conveyor 330 is not limited to a disk-shaped one. A roller conveyor may be used for example.

Having described the embodiments according to the present disclosure with use of specific terms, the description is merely illustrative for better understanding, and by no means limits the disclosure or the claims. The scope of the present invention is defined by the claims, and therefore encompasses any embodiment, Example, and Modified Example having not been described above.

REFERENCE SIGNS LIST

L1 wavelength swept light, L1a broadband pulsed light, L2 object light, 2 sample, 4 measurement position, L3 reference light, 100 optical measurement apparatus, 200 light source apparatus, 202 pulsed light source, 210 stretcher, 220 wavelength selector, 222 lens, 224 wavelength selection filter, 226 condenser lens, 230 divider, 232 first AWG, 234 input waveguide, 236 output waveguide, 238 input-side fiber, 240 delay line, 242 fiber, 250 coupler, 252 second AWG, 254 input waveguide, 256 output waveguide, 258 output-side fiber, 300 spectroscopic head, 310 irradiation optical system, 312 collimator, 314 beam splitter, 316 mirror, 320 light receiver, 322 first photodetector, 324 second photodetector, 330 conveyor, 332 sample holder, 340 optical path switching element, 342 aperture, 350 controller, 352 position sensor, 356 arithmetic unit, 360 light shielding element, 400 arithmetic processing unit

**Claims**

1. An optical measurement apparatus comprising:

   a light source apparatus structured to generate wavelength swept light;
   an irradiation optical system structured to irradiate a measurement position with the wavelength swept light;
   a conveyor structured to convey a target object to be measured so as to pass the object through the measurement position;
   a light receiver structured to measure an object light ascribed to the wavelength swept light transmitted through the target object to be measured;
   an optical path switching element provided to an optical path of the wavelength swept light, and is structured to switch the optical path of the wavelength swept light; and
   a controller structured to control the optical path switching element, depending on presence or absence of the target object to be measured.

2. The optical measurement apparatus according to claim 1, wherein the optical path switching element contains any one of a galvano mirror, a micro electromechanical systems (MEMS) mirror, a piezo-driven mirror, a polygon mirror, or a fiber switch.

3. The optical measurement apparatus according to claim 2, further comprising an aperture provided on an output end side of the optical path switching element.

4. An optical measurement apparatus comprising:

   a light source apparatus structured to generate wavelength swept light;
   an irradiation optical system structured to irradiate a measurement position with the wavelength swept light;
a conveyor structured to convey a target object to be measured so as to pass the object through the measurement position;
a light receiver structured to measure an object light ascribed to the wavelength swept light transmitted through the target object to be measured;
a light shielding element provided to an optical path of the wavelength swept light, and is structured to switch between transmission/non-transmission of the wavelength swept light; and
a controller structured to control the light shielding element, depending on presence or absence of the target object to be measured.

5. The optical measurement apparatus according to claim 4, wherein the light shielding element contains either a movable shutter or a variable attenuator.

6. The optical measurement apparatus according to claim 5, wherein the variable attenuator contains any of a liquid crystal shutter, an acousto-optical modulator, or an electro-optical modulator.

FIG. 1

EP 4 521 082 A1

FIG. 2

FIG. 3

INTENSITY-TIME WAVEFORM OF WAVELENGTH SWEPT LIGHT

$I_{WS}(t)$

WAVELENGTH-TIME WAVEFORM OF WAVELENGTH SWEPT LIGHT

## FIG. 4

FIG. 5

EP 4 521 082 A1

FIG. 6

EP 4 521 082 A1

FIG. 7

EP 4 521 082 A1

FIG. 8

FIG. 9

EP 4 521 082 A1

FIG. 10

EP 4 521 082 A1

# INTERNATIONAL SEARCH REPORT

| International application No. |
| --- |
| **PCT/JP2023/019148** |

| A. | CLASSIFICATION OF SUBJECT MATTER |
| --- | --- |

*G01J 3/08*(2006.01)i; *G01N 21/59*(2006.01)i
FI:  G01J3/08; G01N21/59 Z

According to International Patent Classification (IPC) or to both national classification and IPC

| B. | FIELDS SEARCHED |
| --- | --- |

Minimum documentation searched (classification system followed by classification symbols)

G01J 3/00-3/51; G01J 1/02-1/06; G01J 11/00; G01N 21/00-21/01: G01N 21/17-21/61; G01N 35/00-35/10; B07C 5/342; G02B 5/00; G02F 1/13; G02F 1/29; G02F 1/35-1/39; G12B 17/00; G12B 17/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 09-079978 A (ISHIKAWAJIMA HARIMA HEAVY IND. CO., LTD.) 28 March 1997 (1997-03-28) paragraphs [0010]-[0012], [0017], [0019]-[0029], [0032], [0040]-[0044], fig. 1, 2, 4, 8, 9 | 4-6 |
| Y | | 1-3 |
| Y | JP 62-095448 A (KOWA CO.) 01 May 1987 (1987-05-01) page 3, upper left column, line 19 to upper right column, line 19, fig. 1 | 1-3 |
| A | JP 2021-089283 A (LOCKHEED MARTIN CORP.) 10 June 2021 (2021-06-10) entire text, fig. 1A-5 | 1-6 |
| A | JP 2020-159973 A (USHIO INC.) 01 October 2020 (2020-10-01) paragraphs [0048]-[0063], fig. 8-10 | 1-6 |
| A | JP 2011-147966 A (SUMITOMO ELECTRIC IND. LTD.) 04 August 2011 (2011-08-04) entire text, fig. 1-4 | 1-6 |
| A | JP 11-051928 A (KUBOTA CORP.) 26 February 1999 (1999-02-26) paragraphs [0027]-[0029], [0038], fig. 2 | 1-6 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 August 2023** | **08 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/019148** |

**C. DOCUMENTS CONSIDERED TO BE RELEVANT**

| Category* | Citation of document, with indication, where appropriate, of the relevant passages | Relevant to claim No. |
|---|---|---|
| A | JP 09-074848 A (TOYO NOKI KK) 25 March 1997 (1997-03-25)<br>paragraph [0017], fig. 5 | 1-6 |

Form PCT/ISA/210 (second sheet) (January 2015)

INTERNATIONAL SEARCH REPORT
Information on patent family members

International application No.

**PCT/JP2023/019148**

| Patent document cited in search report | | | Publication date (day/month/year) | Patent family member(s) | | | Publication date (day/month/year) |
|---|---|---|---|---|---|---|---|
| JP | 09-079978 | A | 28 March 1997 | (Family: none) | | | |
| JP | 62-095448 | A | 01 May 1987 | (Family: none) | | | |
| JP | 2021-089283 | A | 10 June 2021 | US | 2021/0172790 | A1 | |
| | | | | EP | 3832275 | A1 | |
| JP | 2020-159973 | A | 01 October 2020 | WO | 2020/196689 | A1 | |
| | | | | US | 2022/0170791 | A1 | |
| | | | | EP | 3951335 | A1 | |
| | | | | CN | 113544480 | A | |
| JP | 2011-147966 | A | 04 August 2011 | (Family: none) | | | |
| JP | 11-051928 | A | 26 February 1999 | (Family: none) | | | |
| JP | 09-074848 | A | 25 March 1997 | (Family: none) | | | |

Form PCT/ISA/210 (patent family annex) (January 2015)

**REFERENCES CITED IN THE DESCRIPTION**

**Patent documents cited in the description**

- JP 2020159973 A